(19) Europäisches Patentamt

European Patent Office

Office européen des brevets

(11) **EP 1 088 763 A2**

(12) **EUROPEAN PATENT APPLICATION**

(43) Date of publication:
**04.04.2001 Bulletin 2001/14**

(51) Int. Cl.[7]: **B65D 1/02**

(21) Application number: **00118793.9**

(22) Date of filing: **30.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.09.1999 DE 19942109**

(71) Applicant:
**RPC Verpackungen Kutenholz GmbH
27449 Kutenholz (DE)**

(72) Inventors:
• **Holst, Dieter
27449 Kutenholz (DE)**
• **Dieckmann, Reinhard
27449 Kutenholz (DE)**

(74) Representative:
**Leonhard, Frank Reimund, Dipl.-Ing. et al
Leonhard - Olgemöller - Fricke
Patentanwälte
Postfach 10 09 57
80083 München (DE)**

(54) **Gegen Druckdifferenzen stabilisierter Kunststoffcontainer**

(57) Zur Schaffung eines Containers, der nach dem Befüllen und auch im Zuge des Lagerns bei entstehenden Druckdifferenzen keine Verformungen erfährt, selbst dann nicht, wenn heißes Füllgut eingefüllt und der Container verschlossen wird, bevor eine Abkühlung stattgefunden hat, wird ein langgestreckter Hohlkörper (1) vorgeschlagen, der einen geöffneten Mündungsbereich (E,F), einen Körper (A,B,C) und einen geschlossenen Bodenbereich (D) aufweist. Im Körperbereich (A,B,C) sind mehrere nach innen vorspringende Versteifungen (10,20) vorgesehen, insbesondere im wesentlichen regelmäßig verteilte axial verlaufende Rippen (20a,21a,22a) und/oder umfänglich orientierte - sich radial nach innen erstreckende -
Verdickungen (10r,11r,12r) der Wanddicke der Containerwand.

Figur 2

EP 1 088 763 A2

## Beschreibung

Die Erfindung befaßt sich mit einem aus Kunststoff bestehenden Container. Solche Container werden häufig als langgestreckte Hohlkörper im Extrusionsverfahren mit einem anschließenden Blasformungsschritt hergestellt. Das in diesen zwei Stufen beschriebene Extrusionsblasen ist zur Herstellung beliebig geformter Hohlkörper geeignet und kostengünstig, wobei die hergestellten Hohlkörper von sehr kleinen bis zu ganz großen Volumina reichen können.

Auch andere Herstellverfahren können zur Herstellung dieses Containers verwendet werden. Beispielsweise wird in **DE-A 29 44 160 (Yoshino)** eine biaxial versteifte PET-Flasche vorgeschlagen, die wenig elastische Nachgiebigkeit im Wandbereich aufweist und im Körperbereich gemäß der dortigen Figur 6 außen nicht eben gestaltet ist, was die Anbringung eines Etiketts für das Beschriften oder Bewerben der beschriebenen PET-Flasche erfordert.

Solchermaßen hergestellte Container werden nach der Herstellung und ggf. nach einem Transport zum Abfüller mit Füllstoffen befüllt, zumeist Lebensmitteln in flüssiger Form, meist auch in warmer oder heißer Form. Nach der Abfüllung und nach dem Verschließen des Behälters kühlt die Füllung ab und der Container wird einer Druckdifferenz ausgesetzt, die vom Atmosphärendruck von außen gegenüber einem reduzierten von innen entgegenwirkenden Gegendruck veranlaßt wird. Dadurch ist insbesondere bei langgestreckten Containern mit einer Verformung dieser Container im zentralen Bereich ihrer axialen Erstreckung zu rechnen, wenn der Container nicht besonders stabil aufgebaut ist. Unter einer besonders stabilen Bauweise ist zunächst **eine große Wanddicke** zu verstehen, die es ermöglichen würde, die Druckdifferenzen ohne Verformung des Containers aufzunehmen. Solcher Art Container sind aber zumeist kostenträchtig in der Herstellung und auch hinsichtlich ihres Gewichtes wenig vorteilhaft. Es bietet sich deshalb die Möglichkeit an, die Container mechanisch zu versteifen, was z.B. umfänglich orientierte Nuten oder Wellen sein können, die beim Blasformen in den Kunststoffbehälter eingeprägt werden, vgl. obige DE-Schrift. Diese mechanisch stabilisierten Zonen können aber nicht den gesamten Behälter einnehmen, weil er dadurch seine Eigenschaft verliert, eine glatte äußere Oberfläche für Beschriftungs- oder Kennzeichnungszwecke zu erhalten.

Die beschriebenen Druckdifferenzen durch Abkühlen des Containerinhaltes entstehen auch ohne warm eingefüllte Füllstoffe, wenn der Container länger gelagert wird. Bei längerer Lagerung bildet sich der Differenzdruck durch Wandern von Gasen durch die Container-Wand aus, so daß auch während der Dauer der Lagerung und der Schaustellung zunächst formschöne Container Verformungen erleiden können.

Die Erfindung geht deshalb **von der Aufgabe aus,** einen eingangs beschriebenen Container zu schaffen, der nach dem Befüllen und auch im Zuge des Lagerns bei entstehenden Druckdifferenzen keine Verformungen erfährt, selbst dann nicht, wenn heißes Füllgut eingefüllt und der Container verschlossen wird, bevor eine Abkühlung stattgefunden hat.

Gelöst wird dieses Problem mit Anspruch 1 oder 10. Hergestellt wird dieser Container nach Anspruch 18 oder Anspruch 21.

Die Erfindung schlägt dazu nach innen vorspringende Versteifungen im Körperbereich des Containers vor, um in diesem Bereich die Außenfläche glatt zu belassen. Die nach innen vorspringenden Versteifungen können axiale Streben oder Rippen sein. Diese Versteifungen können auch umfänglich verlaufende Verstärkungen oder Verdickungen der Kunststoffwand sein. Auch Kombinationen dieser nach innen reichenden Versteifungen sind für die Stabilisierung vorteilhaft.

Der Hohlkörper erhält so ein Gerippe oder ein gitterartiges Gerüst (Anspruch 1), das in der Wand selbst orientiert ist und nach außen nicht hervortritt. Dieses innere Gerippe oder Gerüst ist ein mechanisch gut stabilisierendes Gebilde, das weder von den Kosten, noch von dem Gewicht her nachteilig ist. Es bietet sich sogar an, den Kunststoffbehälter in denjenigen Bereichen, die nicht von dem Gerippe eingenommen werden, dünner zu gestalten, als bekannte Behälter, die für den Ausgleich der Druckdifferenz zumindest eine vorgegebene Mindestwanddicke aufweisen müssen. Mit der Erfindung wird es möglich, diese Mindestwanddicke zu senken und durch die umfänglichen oder axialen Versteifungen zusätzlich Kräfte aufzunehmen, die größer sein dürfen als bei einem solchen Kunststoff-Container, der eine größere, aber konstante Wanddicke im Körperbereich besitzt. Auf diese Weise kann Kunstoffgewicht eingespart werden.

Der Körperbereich kann an beiden Endabschnitten einen zusätzlich stabilisierenden Bereich besitzen, in dem auch nach außen orientierte Verformungen zur Stabilisierung der Flasche beitragen, so im Anschluß an den Bodenbereich und im Anschluß an den Mündungsbereich (meist bestehend aus einem Hals und einer Schulter), wo stärkere mechanische Belastungen im Zuge des Gebrauchs des Containers auftreten. Diese Bereiche werden zu Beschriftungszwecken oder zu Kennzeichnungszwecken weniger benötigt, so daß der zentrale Körperbereich weiterhin zu Beschriftungszwecken vorteilhaft zur Verfügung steht, gleichzeitig aber - von außen unsichtbar - nach innen stabilisiert wird.

Die Herstellung des Containers ist mit wenig Änderungen an bestehenden Herstellmaschinen möglich.

So wird z.B. nur der Kern in einer Düsenanordnung eines Blaskopfes mit Längsnuten versehen, die umfänglich angeordnet sind, insbesondere in gleichmäßigen umfänglichen Abständen, so daß ein entstehender Schlauch beim Extrudieren bereits die axialen Versteifungen besitzt. Die Längsnuten sind bevorzugt im Endbereich der Düsenanordnung vorgesehen. Es schließt sich der eingangs beschriebene Blasformschritt an, mit dem aus dem Schlauch durch Schließen einer mehrteiligen Blasform und Aufblasen des schlauchförmigen Vorformlings der geschlossene Container mit Mündungsbereich (meist mit Gewindebereich am Hals), Körperbereich und Bodenbereich entsteht.

Die umfänglich orientierten, sich nur kurz in axialer Richtung erstreckenden Verstärkungen als ringstreifen-förmige Dickstellen können ohne Veränderung des Kerns eines beschriebenen Kopfes hergestellt werden, wenn die bei solchen Geräten vorhandenen Verstelleinrichtungen des Düsenkopfes zur Wanddickeneinstellung des entstehenden Schlauches beim Blas- oder Extrusionsformen des schlauchförmigen Vorformlings mehrfach gesteuert verändert werden, um die Wanddicke des Schlauches beim Formen mehrfach zu verändern. Die periodische Veränderung eines Spalts der ringförmigen Auslaßdüse wird zumindest dann eingesetzt, wenn der Körperbereich der Preform entsteht.

Die beschriebene strukturierte Verstärkung, die aus mehreren umfänglichen oder aus mehreren axialen nach innen vorspringenden Versteifungen besteht, vermeidet einen sog. "Panelling-Effekt", bei dem während der Dauer der Lagerung des Containers die rotationssymmetrische Form, zumeist die kreisförmige Gestalt, zuungunsten eines einseitig abgeflachten oder "eingepanellten" Flachstellenbereiches verlorengeht. Solcher Art Flaschen werden ungern gekauft, weil ihnen der scheinbare Makel anhaftet, daß das von ihnen beherbergte Lebensmittel seine Haltbarkeit überschritten hat oder in irgendeiner Weise schadhaftig ist.

Die umfänglichen Versteifungen sind als Verdickungen beschrieben. Verdickungen sind solche Dickstellen, die mit Kunststoffmaterial ausgefüllt sind, was sich aus der Herstellung des Extrudierens und des anschließenden Blasformens ergibt. Mit anderen Worten beschrieben sind die umfänglichen Versteifungen keine radial gerichteten Einformungen, die durch eine Kontur der Blasform zustande kommen, um entweder die äußere Wand nach innen einzuformen oder die innere Wand nach außen umzuformen.

Der hergestellte Container kann aus einem undurchsichtigen Kunststoff bestehen (Anspruch 17). Der Kunststoff ist so gestaltet, daß der Container bevorzugt elastisch nachgiebig ist, um durch Druck auf seine Außenwand ein forciertes Entnehmen des Inhaltes zu bewirken. Der Kunststoff mit dieser Elastizität, die als stark elastisch nachgiebig beschrieben ist (Anspruch 17, zweite Alternative), erhält als stabilisierendes Element die umfänglichen und/oder die axialen Werkstoffversteifungen, die mit Kunststoff angefüllt sind. Dadurch wird der Container gegen die eingangs beschriebene Druckschwankung unempfindlich, erhält also keine nachgiebigen Einformungen, die sein äußeres Erscheinungsbild beeinträchtigen, behält aber gleichzeitig die hohe Elastizität bei, die bei PET-Getränkeflaschen aufgrund ihrer inneren Steifigkeit nicht gegeben ist.

Die vorgeschlagene Herstellvorrichtung (Anspruch 21) hat einen Düsenbereich, der eine vorgeformte Ausbildung im Düsenspalt besitzt, die eine umfängliche Verteilung von Spalterweiterungen besitzt. Diese auch nutenförmigen Ausbildungen entweder des Kernes oder des Düsenmantels bewirken eine umfänglich verteilte Veränderung der Wanddicke des entstehenden Vorformlings am Austritt des Düsenkopfes. Dabei kann der Düsenkopf sowohl nach innen geneigt konisch, wie auch nach außen geneigt konisch ausgebildet sein, er kann auch zusätzliche zylindrische Führungen im Anschluß an eine konische Ausbildung besitzen. Bevorzugt ist der Düsenkopf zumindest im unmittelbaren Austrittsbereich mit den nutenförmigen Veränderungen am Umfang zu versehen. Diese nutenförmigen Veränderungen müssen nicht zwingend axial verlaufen, sie sind als Längsnuten in Richtung des Flusses des Kunststoffes gestaltet und können dabei bei Anordnung auf einem Konus auch schräg verlaufen, ebenso wie sie zylindrisch verlaufen können, wenn der unmittelbare Austritt der Düse ein zylindrischer Austritt ist.

Ausführungs**beispiele** erläutern und ergänzen die Erfindung

| | |
|---|---|
| **Figur 1** | veranschaulicht eine schematische Ansicht einer langgestreckten Flasche mit einem Gewindebereich E am Hals und axial orientierten Versteifungen. |
| **Figur 2** | veranschaulicht eine Flasche gleicher Gestalt mit umfänglich verlaufenden Dickstellen, die axial beabstandet sind. |
| **Figur 1a, Figur 2a** | veranschaulichen Ausschnitte von axialem und radialem Schnitt aus den Wandbereichen der Flaschen gemäß den Figuren 2 und 1. |
| **Figur 3** | veranschaulicht einen Schneckenextruder zur Herstellung eines Vorformlings K1 in Schlauchform, der von einer schematisch dargestellten Blasform 80 mit zwei Hälften 80a,80b in einem Blasformschritt zu einer Flaschenform umgeformt wird, die die Gestalt gemäß den Figuren 1 und/oder 2 besitzt. |
| **Figur 4** | veranschaulicht einen alternativen Düsenkopf zur Anbringung im Düsenbereich 33 der Figur 3. |

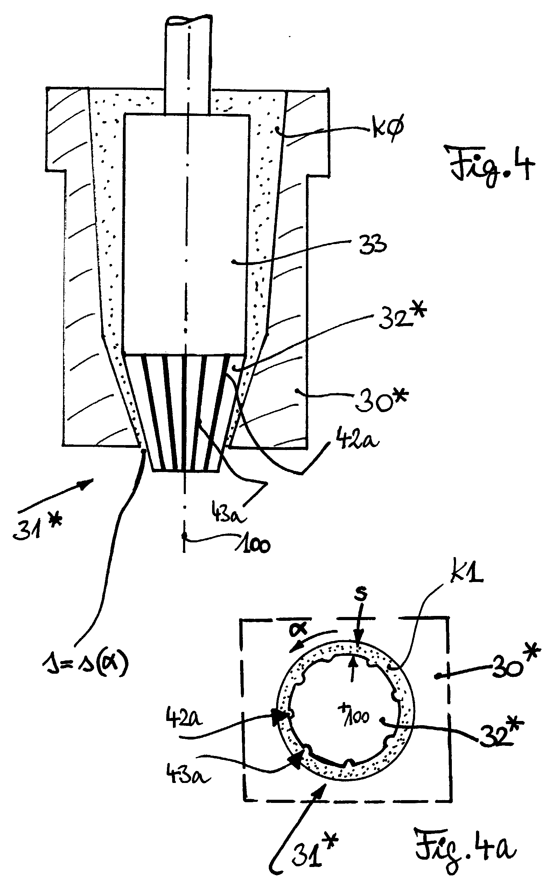

**Figur 4a** zeigt eine Bodenansicht der Düsenanordnung von Figur 4, aus der der Spalt "s" ersichtlich ist, wobei hier am Kern 32* umfänglich mehrere Längsnuten 42a,43a verteilt angeordnet sind, die leicht konisch verlaufen, entsprechend dem Dorn/Kern 32*.

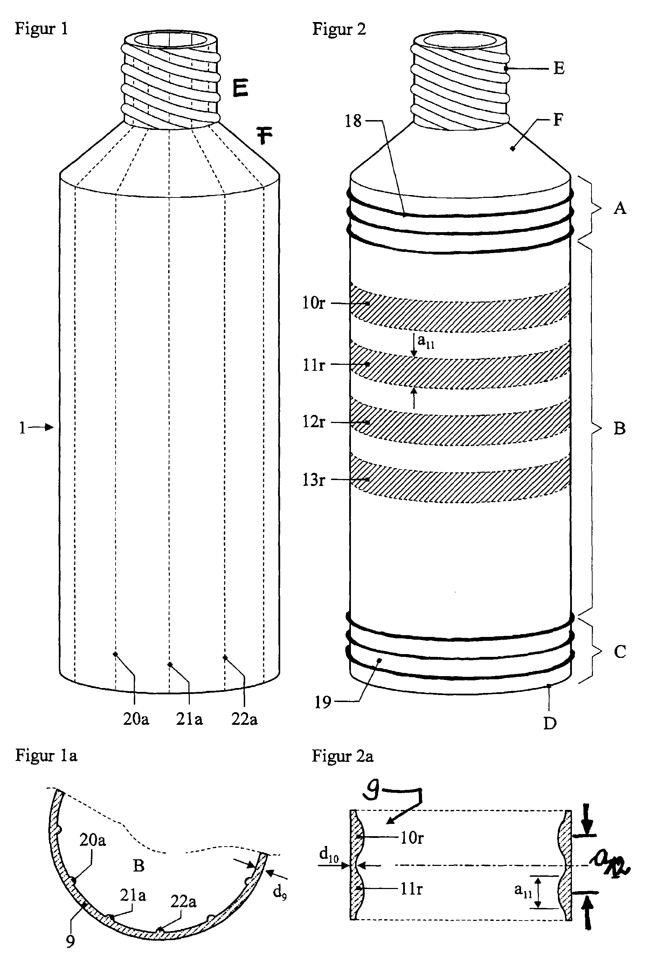

Die Ausführungsbeispiele von Kunststoff-Containern gemäß den **Figuren 1 und 2** werden leichter verständlich, wenn zunächst ein Herstellverfahren beschrieben wird, mit dem die im Beispiel zylinderförmigen, mit einem langgestreckten Körper, einem geschlossenen Boden und einem Mündungsbereich mit einem Gewindeabschnitt versehenen Flaschen hergestellt werden. Dieses Beispiel ist rotationssymmetrisch.

Zunächst wird von einer Festlegung der Bereiche ausgegangen. Der Mündungsabschnitt E,F besteht aus einem zylindrischen Gewindeabschnitt am Hals zur Aufnahme einer Schraubkappe, gefolgt von einem im Beispiel konisch nach außen verlaufenden Übergangsabschnitt F als Schulter, an den sich der Körperbereich A,B,C anschließt. Am unteren Ende des Körperbereiches findet sich der Bodenbereich D, der verschlossen ist und zum Abstellen der langgestreckt zylindrischen Flasche dient. In den axialen Außenbereichen A,C des Körpers sind ringförmige Rippen 18,19 oder Nuten zur Versteifung und Stabilisierung vorgesehen. Der Zentralbereich B des Körpers dient zumeist der Darstellung des Inhaltes des beschriebenen Containers, sei es durch Aufkleben oder Anheften oder Aufschweißen von Etiketten oder durch gesondertes Bedrucken der Oberfläche dieses Bereiches oder zumindest eines Teiles dieses Bereiches.

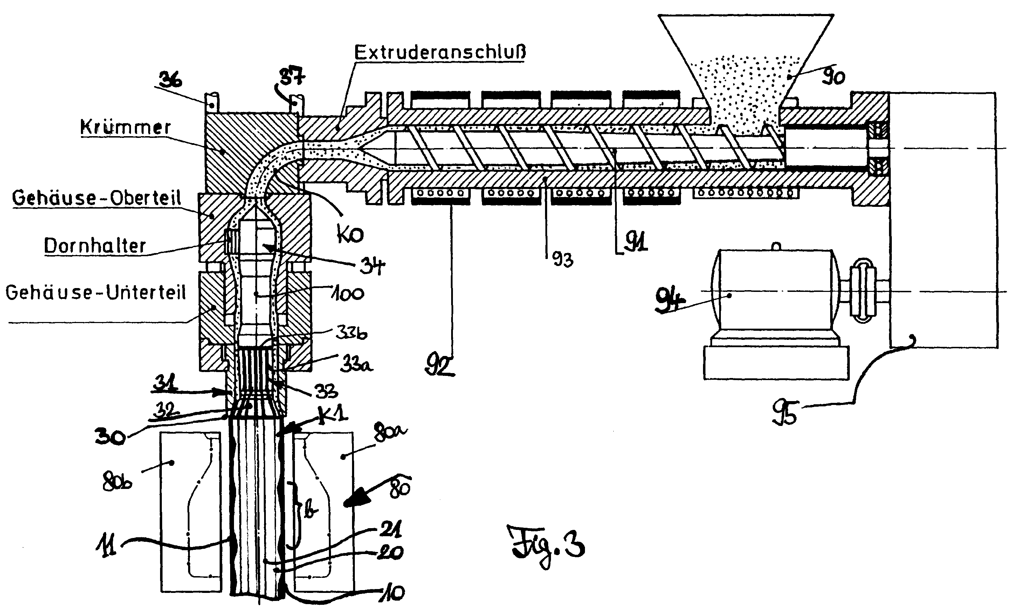

Am Herstellverfahren soll deutlich werden, wie dieser angesprochene Bereich stabilisiert werden kann. Dabei wird von **Figur 3** ausgegangen, die eine im groben Übersichtsbild zunächst konventionelle Extrudereinrichtung mit einem Einfülltrichter 90 für Kunststoffgranulat zeigt. Dem Einfülltrichter 90 nachgelagert ist eine Schnecke 91, die in einem Zylinder 93 drehbar geführt ist, um den ein Heizband 92 gelegt ist, das zum Erweichen oder Schmelzen des Kunststoffgranulates bei Erhitzen dient. Am vorderen Ende der Schnecke ist ein konischer Abschnitt vorgesehen, der über einen Extruderanschluß und einen Krümmer in ein Gehäuse-Oberteil führt, in das der erweichte Kunststoff K0 von der Schnecke gedrückt wird. Im Gehäuse-Oberteil beginnt ein von unten nach aufwärts ragender Kern 34 mit einer konisch ausgebildeten Spitze und einem Dornhalter, der sich bis hin zum Düsenabschnitt 31 erstreckt. Dieser Dorn (Kern) ist längs einer Achse 100 ausgerichtet, die senkrecht zur Erstreckung der Schnecke 91 angeordnet ist.

Unter dem Gehäuse-Oberteil ist ein Gehäuse-Unterteil angeordnet, das über Zugstangen 36,37 für eine Düsenverstellung relativ zum Gehäuse-Oberteil verstellt werden kann, wobei der Kern 34 mit dem Dornhalter im Oberteil fest gehalten bleibt. Das Gehäuse-Unterteil wird axial entlang der Achse 100 verschoben und verstellt somit eine konisch am vorderen Ende ausgebildete, ringförmige äußere Umfassung 30 des vorderen Endes des Kernes 34, der hier als Dornabschnitt 32 bezeichnet ist. Dieser Abschnitt 32 hat einen konisch auswärts orientierten Abschnitt, der mit dem konisch einwärts orientierten Außenabschnitt 30 des Gehäuse-Unterteiles korrespondiert. Eine Relativverschiebung in axialer Richtung 100 dieser beiden Teile führt zu einer Veränderung der ringförmigen Düse bzw. des Düsenschlitzes, durch den der erweichte Kunststoff K0 hindurchtritt, um nach Austritt aus der Düse den Vorformling K1 zu bilden, der hier schlauchförmig dargestellt ist.

Schematisch ist bereits um den Vorformling K1 eine Blasform 80 dargestellt, die aus zwei Blasformhälften 80a,80b besteht. Nach Fertigstellung des Vorformlings fahren diese beiden Blasformhälften zusammen, um mittels einer Quetschkante im Werkzeug den unteren Teil des Vorformlings zu verschweißen und einen Bodenabschnitt auszubilden, aus dem nach Blasformen der Bodenbereich D der Figur 2 entsteht. Im Mündungsbereich wird ein Blasdorn eingeführt, der durch Einführen von Gas unter Druck bis zu 10 bar (1 MPa) die Ausformung des schlauchförmigen Vorformlings K1 zu der in Figur 1 und 2 abgebildeten Containerform bewirkt. Er dient außerdem dazu, den Mündungsbereich zu kalibrieren. Das Aufblasen wird gefolgt von einem Abkühlen und einem Entformen durch Auseinanderbewegen der Blasformhälften. Nach dem Entnehmen des fertigen Containers kann ein neuer Vorformling für die Blasform, der durch Extrudieren aus dem ringförmigen Düsenschlitz der Düse 31 gebildet wurde, durch Schließen der Hälften unter der Düse 31 übernommen werden. Zwischen dem Blasdorn und der Düse kann eine Verfahrbewegung der Formhälften 80a,80b erfolgen.

Es versteht sich, daß ein Antriebsmotor 94 und ein entsprechend dimensioniertes Getriebe 95 die Schnecke antreibt, um den erweichten Kunststoff unter Druck zu setzen und ihn über den Krümmer und an dem Kern vorbei in einer ringförmigen Bahn bis zum ringförmigen Austritt der Düse 31 zu bewegen.

Werden die Zugstangen für die Düsenverstellung verändert, so verändert sich die Dicke der Wand des Vorformlings K1. Dieser Vorformling K1 hat einen in Figur 3 eingezeichneten zentralen Bereich b, der dem Bereich B in Figur 2 bezüglich des Containers entspricht.

Wenn bei einem stetigen Entstehen des Vorformlings K1 unter Druck des Kunststoffes K0 aus dem Extruder eine Veränderung der Düsenstellung durch relative axiale Verstellungen des Gehäuse-Unterteils bzw. des ringförmigen Außenteils der Düse gegenüber dem axial feststehenden Kern 34 erfolgt, verändert sich die Wanddicke. Diese Wandveränderung 10,11 im Vorformling K1 verändert auch die Wanddicke im fertig geblasenen Container gemäß Figur 2. Wird demgemäß die Verstellung des Düse so wiederholt, daß sie mehrfach während der Ausbildung zumindest des Bereiches b der Vorform K1 verstellt wird, entstehen ringförmige Dickstellen 10,11, die für den fertig geformten Container die Dickstellen 10r,11r,12r,13r sind, die einen axialen Abstand (z.B. der Abstand $a_{12}$) entsprechend der Wiederholgeschwindigkeit der Verstellung besitzen. Die gesteuerte Veränderung der Wanddicke des Vorformlings, besonders im Bereich b ist dann ursächlich für eine vorgegebene Verstärkung für den Container nach dem Blasformen. Bei vorgegebener Verstärkung kann die Wanddicke insgesamt - im Mittel gesehen - sogar reduziert werden, so daß Kunststoff eingespart werden kann, ohne die Stabilität der fertig geblasenen Wand zu verlieren.

Zusätzlich oder alternativ kann auch eine andere Verstärkung der Wand im Vorformling K1 (oft auch "Preform" genannt) erfolgen. Dazu wird der Kern besonders ausgebildet, hier mit einer Vielzahl von umfänglich beabstandeten, aber im wesentlichen axial verlaufenden Nuten 33a,33b im Düsenbereich, speziell im vorderen Bereich 32 der Düse 31. Hier ist eingezeichnet, daß die Veränderung durch Nuteinbringung in einem zylindrischen Abschnitt 33 direkt vor dem konischen Endabschnitt 32 der Düse 31 beginnen. Ebenso ist es möglich, nur den konisch ausgebildeten Dornabschnitt 32 mit umfänglich beabstandeten, dann aber nicht exakt axial verlaufenden Längsnuten 33a,33b zu versehen, so daß beim Extrudieren des Kunststoffes K0 zur Bildung der Preform K1 eine Vielzahl von umfänglich beabstandeten, nach innen vorstehenden Rippen 20,21 entstehen, die eine mehrfache Veränderung der Wanddicke entlang des Umfanges begründen. Die axial orientierten, entstehenden Rippen führen nach dem Blasformschritt zu den in Figur 1 ersichtlichen Stegen 20a,21a,22a, die entlang des gesamten Hohlkörpers 1 verlaufen, aufgrund der Ausbildung der Düse. Im Bereich b und B sind sie in jedem Falle auch vorhanden, so daß sie einerseits allein, aber auch in Kombination mit den umfänglich verlaufenden Dickstellen 10r,11r durch Steuerung des Düsenschlitzes eine gerüstförmige Stabilisierung des Körperbereiches der Flasche durch Vorausbildung der Preform ermöglichen.

Die so beschriebene Herstellung eines Containers kann leicht erkennbar machen, wie der Container gemäß den Figuren 1 und 2 ausgebildet werden kann, wobei die beiden Individualfälle der axialen Rippen durch besondere Ausbildung der Düse 31 und die Ausführungsform mit einer Steuerung des Düsenspaltes individuell gezeigt werden, woraus sich die gemeinsame Ausbildung von beiden vorgesehenen Versteifungen zusammen ohne weiteres ergibt.

Figur 1 veranschaulicht den Körperbereich B, der die Schaufläche des Containers bilden soll. Hier ist eine mehrfache (periodische) Wandverdickung 20a,21a,22a vorgesehen, die im radialen Schnitt in Figur 1a besonders deutlich wird. Die linienförmig verlaufenden Rippen oder Stege 20a,21a,22a sind umfänglich beabstandet und verändern die Wanddicke $d_9$ nur geringfügig, Im Beispiel ist die Wanddickenerhöhung in die Bereiche der Rippen kleiner als die Grundwanddicke, hier etwa 10% bis 20% davon. Die so gebildete Rippenstruktur an der inneren Containerwand 9 ermöglicht eine Verstärkung oder Versteifung der gesamten Flasche, nicht nur im Körperbereich, sondern auch im Übergangsbereich F und im oberen und unteren Randbereich A,C des Körperbereiches.

Der Abstand dieser Rippen ist viel größer als ihre umfängliche Erstreckung. Im Beispiel ist der Abstand so gewählt, daß er größer als 10 mal der Breite der Rippe 20a für eine periodische Abfolge der Rippenstruktur entlang eines zylindrischen Containers beträgt.

Die andere Verstärkung oder Versteifung der Flasche im Schaubereich B ergibt sich aus Figur 2 bzw. einer axialen Schnittdarstellung der Wand in Figur 2a. Dort sind mehrere axial beabstandete, sich jeweils umfänglich erstreckende
Dickstellen 10r,11r,12r der Wand 9 vorgesehen. Diese Dickstellen führen im Schnitt der Figur 2a zu einer wellenförmigen Struktur der Wanddicke $d_{10}$. Der Abstand $a_{12}$ zwischen zwei Wellenbergen wird enger gewählt als der Abstand zwischen den Rippen 20a,21a in Figur 1. So ist im Beispiel der Abstand der Wellenberge etwa doppelt so groß wie die axiale Erstreckung $a_{11}$ eines jeweiligen Verstärkungsrings 10r,
11r,12r oder 13r. Dieser Abstand kann auch größer gewählt werden, so daß das Verhältnis zwischen axialer Erstreckung einer Verdickung 10r und der Wiederkehr der nächsten axial beabstandeten Verdickung größer als 2 ist.

Die Verdickungsbereiche befinden sich bevorzugt im Schaubereich B. Außerhalb dieses Bereiches in dem oberen und dem unteren Körperbereich A,C können zusätzliche, außen sichtbare ringförmige Verstärkungen liegen.

In den Schnittdarstellungen der **Figuren 1a,2a** ist ersichtlich, daß die Außenfläche jeweils glatt ist, zumindest im Körperbereich B, aus dem die Schnittdarstellungen stammen. Ist der Außenbereich glatt, ist er besonders gut geeignet für eine Bedruckung oder eine Beschriftung, trotzdem ist er innen verstärkt und versteift, um Druckdifferenzen zwischen Umgebung und Innenraum der Flasche auszugleichen. Solche Druckdifferenzen entstehen dabei sowohl nach dem Abfüllen und Verschließen wie auch bei längerer Lagerung durch Wandern von Gasen durch die Container-Wand und Ausbilden des beschriebenen Differenzdrucks. Bei der gewählten Versteifung zumindest eines Teiles des Schaubereiches B kann dieser Bereich von Verformungen freigehalten werden.

Eine alternative Gestaltung des Düsenkopfes von Figur 3 (dort mit 31 bezeichnet) ist als Düsenkopf 31* in **Figur 4** im Schnitt veranschaulicht, während **Figur 4a** eine Aufsicht von unten zu Figur 4 zeigt, zur Veranschaulichung des Spaltes s, aus dem der Vorformling K1 entsteht.

Der Dorn 32* ist am Ende nach innen konisch geneigt, ebenso wie die umlaufende Einfassung 30* innen nach außen konisch geneigt ist, so daß eine Verstellbewegung in axialer Richtung 100 ein Öffnen und Schließen der Spaltbreite s von Figur 4a ergibt.

Aufgrund eingeformter Nutbereiche 42a,43a auf der Konusfläche des Kerns 33 hat der Spalt s keine gleichmäßige Gestalt, sondern eine in bestimmten Abständen jeweils rinnenförmige Verdickung, die zu den Stegen 20,21 im Vorformling K1 führt, wenn der Kunststoff K0 aus dem Düsenkopf herausgepreßt wird. Die Spaltbreite s ist somit eine Funktion vom Umfang $s = s\,(\alpha)$.

Die Länge des axialen Abschnittes B des Containers ist nicht unwesentlich, sondern deutlich ersichtlich. Im Beispiel beträgt dieser Bereich etwa die Hälfte der Höhe des Containers.

Aufgrund des Herstellverfahrens ersichtlich ist die mit Kunststoff aufgefüllte Versteifungsstruktur. Sowohl die axialen Stege enthalten Vollmaterial, wie auch die umfänglichen Dickstellen aus Vollmaterial gestaltet sind.

Der Container kann aus opakem Kunststoff hergestellt sein, so daß ein Blick auf seinen Inhalt verborgen ist. Der Kunststoff kann gute Elastizität aufweisen, die ein Zusammendrücken ermöglicht, trotz der vorgesehenen umfänglichen und axialen Versteifungen. Diese Versteifungen sorgen aber dafür, daß Druckunterschiede, die durch warmes Befüllen oder durch lange Lagerzeit entstehen, nicht auf die Form des elastisch nachgiebigen Kunststoffes nachteilig Einfluß nehmen. Eine zylindrische Flasche bleibt auch langfristig zylindrisch. Werden andere Formen vorgesehen, werden auch sie von dem tragenden Versteifungsgerüst getragen.

Zur Schaffung eines Containers, der nach dem Befüllen und auch im Zuge des Lagerns bei entstehenden Druckdifferenzen keine Verformungen erfährt, selbst dann nicht, wenn heißes Füllgut eingefüllt und der Container verschlossen wird, bevor eine Abkühlung stattgefunden hat, wird ein langgestreckter Hohlkörper (1) vorgeschlagen, der einen geöffneten Mündungsbereich (E,F), einen Körper (A,B,C) und einen geschlossenen Bodenbereich (D) aufweist. Im Körperbereich (A,B,C) sind mehrere nach innen vorspringende Versteifungen (10,20) vorgesehen, insbesondere im wesentlichen regelmäßig verteilte axial verlaufende Rippen (20a,21a,22a) und/oder umfänglich orientierte - sich radial nach innen erstreckende - Verdickungen (10r,11r,12r) der Wanddicke der Containerwand.

**Patentansprüche**

1. **Blasgeformter Container aus Kunststoff**, insbesondere als langgestreckter Hohlkörper (1), zur Aufnahme von Lebensmitteln, welcher Container einen geöffneten Mündungsbereich (E,F), einen Körperbereich (A,B,C) mit einer Containerwand und einen geschlossenen Bodenbereich (D) aufweist, wobei ein sich axial auf einer wesentlichen Länge erstreckender Abschnitt (B) des Körperbereichs (A,B,C) mehrere nach innen vorspringende Versteifungen (10r,20a) aufweist, von denen axial verlaufende Versteifungen mit Kunststoff ausgefüllt sind und umfängliche Versteifungen sich mit den axialen Versteifungen kreuzen; wobei

    (a) der Abschnitt (B) auf der Außenseite im wesentlichen glatt ausgebildet ist;
    (b) die umfänglich im wesentlichen regelmäßig verteilten, axial verlaufenden Versteifungen als Rippen (20a,21a,22a) und die umfänglich orientierten Versteifungen als mit Kunststoff ausgefüllte Verdickungen (10r,11r,12r) der Containerwand in dem Abschnitt (B) vorgesehen sind.

2. Container nach Anspruch 1, wobei in dem Körperabschnitt (B) die mehreren umfänglich verteilten und axial durchgehend verlaufenden Rippen (20a,21a,22a) vorgesehen sind, die eine nach innen gerichtete Höhe aufweisen, welche geringer als die Wanddicke ($d_9$) der Containerwand (9) ist.

3. Container nach Anspruch 1, der als umfänglich orientierte Versteifungen axial beabstandete und umfänglich durchgehend verlaufende Dickstellen (10r,11r,12r) aufweist, so daß sich - im axialen Querschnitt gesehen - ein wellenförmiger Verlauf der Wanddicke ergibt, zwischen Wellentälern in der Größenordnung der Wanddicke und den Dickstellen in der Größenordnung der doppelten Wanddicke.

4. Container nach Anspruch 1, wobei die mit Kunststoff ausgefüllten Verdickungen als Dickstellen eine zusätzliche Höhe aufweisen, die in der Größenordnung der Wanddicke ($d_{10}$) zwischen den Dickstellen liegt.

5. Container nach Anspruch 1, bei dem die umfänglich orientierten Verdickungen eine zusätzliche Dicke haben, die größer als die Wanddicke in den Wellentälern zwischen den Verdickungen ist.

6. Container nach Anspruch 1, bei dem der Körperbereich (A,B,C) den außen im wesentlichen glatt ausgebildeten Abschnitt als Zentralbereich (B) und einen oberhalb und unterhalb des Zentralbereiches angeordneten Versteifungsbereich (A,C) aufweist, in dem zusätzliche axiale oder radiale Versteifungen (18,19) angeordnet sind, insbesondere solche Versteifungen, die von der Außenseite des Containers sichtbar sind.

**7.** Container nach Anspruch 6, bei dem im außen glatt ausgebildeten Körperabschnitt (B) eine Kennzeichnung, Werbung oder Information angeordnet ist, insbesondere in aufgeklebter, angeschweißter oder angehefteter Weise.

**8.** Container nach Anspruch 1, bei dem das Verhältnis von axialer Erstreckung ($a_{11}$) einer ringförmigen, umfänglich orientierten Verdickung (10r,11r) zu einem axialen Abstand zwischen der Mitte zweier ringförmiger, umfänglich orientierten Verdickungen kleiner als 0,5 ist.

**9.** Container nach Anspruch 1, bei dem der umfängliche Abstand von zwei axial verlaufenden Rippen (20a,21a) mehr als 10 mal größer ist, als die umfängliche Erstreckung einer der axial verlaufenden Rippen.

**10. Aus Kunststoff hergestellter Container**, insbesondere als langgestreckter Hohlkörper (1) zur Aufnahme von bevorzugt warm abgefüllten Lebensmitteln, welcher Container einen geöffneten Mündungsbereich (E,F), einen Körper (A,B,C) und einen geschlossenen Bodenbereich (D) aufweist, dadurch gekennzeichnet, daß zumindest in einem Abschnitt des Körpers (B) mehrere nach innen vorspringende Versteifungen (10r,20a) vorgesehen sind, insbesondere im wesentlichen regelmäßig verteilte axial verlaufende Rippen (20a,21a,22a) und/oder umfänglich orientierte Verdickungen (10r,11r,12r) der Containerwand.

**11.** Container nach Anspruch 1 oder 10, bei dem die Versteifungen (10r,20a) mit Kunststoff ausgefüllt sind bzw. keine nach innen umgeformte Außenwand und keine nach außen beim Blasformen umgeformte Innenwand besitzen.

**12.** Container nach Anspruch 10, welcher im Körper einen sich axial wesentlich erstreckenden Abschnitt (B) besitzt, der auf der Außenseite im wesentlichen glatt ausgebildet ist.

**13.** Container nach Anspruch 10, welcher im Körper (B) mehrere umfänglich verteilte und axial durchgehend verlaufende Rippen (20a,21a,22a) aufweist, insbesondere mit einer nach innen gerichteten Höhe. die *nicht* geringer als die Wanddicke ($d_9$) der Containerwand (9) ist.

**14.** Container nach Anspruch 10, der axial beabstandete und umfänglich durchgehend verlaufende Dickstellen (10r,11r,12r) aufweist, deren maximale Dicke insbesondere in der Größenordnung der Wanddicke ($d_{10}$) sind, so daß sich - im axialen Querschnitt gesehen - ein wellenförmiger Verlauf der Wanddicke ergibt, zwischen Wellentälern in der Größenordnung der Wanddicke und den Dickstellen insbesondere in der Größenordnung zumindest der doppelten Wanddicke des Wellentals.

**15.** Container nach Anspruch 10, bei dem das Verhältnis von axialer Erstreckung ($a_{11}$) einer ringförmigen Dickstelle (10r,11r) zu einem axialen Abstand zwischen der Mitte von zwei ringförmigen Dickstellen kleiner als 0,5 ist, um ein in Axialrichtung längeres Wellental zwischen zwei beabstandeten, umfänglichen Dickstellen (10r,11r,12r,13r) zu erreichen.

**16.** Container nach Anspruch 10, bei dem der umfängliche Abstand von zwei axial verlaufenden Rippen (20a,21a) mehr als 10 mal größer ist, als die umfängliche Erstreckung einer der axial verlaufenden Rippen.

**17.** Container nach Anspruch 1 oder 10, der aus einem undurchsichtigen Kunststoff hergestellt ist;
oder
der aus einem Kunststoff hergestellt ist, der auf mechanischen Druck von außen elastisch stark nachgiebig reagiert bzw. ist, zumindest im Körperabschnitt (B).

**18. Verfahren** zum Herstellen eines Hohlkörpers als Vorformling für zumindest einen weiteren Umformprozeß, wobei

(a) ein Kunststoff erweicht und unter einem Druck durch eine Düse (31,31*) gedrückt wird, aus der der Vorformling (K1) unter Bildung einer Wanddicke stetig entsteht;
(b) beim Entstehen des Vorformlings (K1) die Wanddicke ($d_9,d_{10}$) periodisch verändert wird, für eine mehrfache Veränderung der Wanddicke (10,11;20,21) zumindest in einem zentralen Bereich (b) des Vorformlings, die einem Körperabschnitt (B) mit einer Schaufläche eines nach dem weiteren Umformprozeß entstehenden Containers (1) entspricht, auf welcher Schaufläche eine Information aufgebracht werden kann.

**19.** Verfahren nach Anspruch 18, bei dem die Wanddickenveränderungen durch mehrfaches axiales Verstellen eines Kopfes der Düse (31,31*) erfolgen, wodurch periodische Dickenänderungen (10,11) in der Wanddicke des Vorformlings entstehen, die axial beabstandet sind, um zur Ausbildung von verdickten Ringen (10r,11r,12r) im Container nach dem zumindest einen weiteren Umformprozeß zu führen.

**20.** Verfahren nach Anspruch 19, bei dem die periodische Steuerung so erfolgt, daß der Abstand benachbarter Dickstellen (10,11) zumindest im zentralen Bereich (b) im wesentlichen gleich ist.

21. Verfahren nach Anspruch 18 oder **Herstellvorrichtung** zur Durchführung des Verfahrens, wobei die Veränderung der Wanddicke durch eine vorgeformte Ausbildung (42a,43a;33a,33b) eines Abschnitts der Düsen (31) erfolgt, um umfänglich beabstandete, aber axial verlaufende Rippen (20,21) zu bilden, die sich entlang zumindest eines Abschnitts (b) des gesamten Vorformlings (K1) erstrecken, welche Rippen im fertigen Container nach dem zumindest einen weiteren Umformprozeß längs verlaufende Stege (20a,21a,22a) bilden.

22. Verfahren oder Vorrichtung nach Anspruch 21, bei dem ein Kern (32,32*) der Düse (31) zumindest abschnittsweise konisch ausgebildet ist.

23. Verfahren oder Vorrichtung nach Anspruch 21, bei dem die vorgeformte Ausbildung des Düsenabschnitts Längsnuten (42a,43a) umfaßt, die im Endbereich der Düse (31,31*) angeordnet sind, um ein gleichförmiges Maß (s) des Düsenspaltes an einer Mehrzahl von umfänglichen Stellen zu erweitern (s($\alpha$)).

24. Verfahren oder Vorrichtung nach Anspruch 21, bei dem die periodisch veränderte Wanddicke durch Nuten (33a,33b;42a,43a) entsteht, die zumindest im konischen Bereich (32) des Kernes oder in einem diesem konischen Bereich nachgelagerten Abschnitt angeordnet sind.

Figur 1

Figur 2

1 →

20a   21a   22a

E

F

18

E

F

A

10r

$a_{11}$

11r

12r

B

13r

19

C

D

Figur 1a

Figur 2a

20a

B

21a   22a

$d_9$

9

$g$

$d_{10}$

10r

11r

$a_{12}$

$a_{11}$

Extruderanschluß

Krümmer

Gehäuse-Oberteil

Dornhalter

Gehäuse-Unterteil

Fig. 3

Fig.4

kØ

33

32*

30*

42a

31*

43a

100

𝟙 = ꓢ(α)

Fig.4a

k1

s

α

42a

30*

43a

+100

32*

31*